# EUROPÄISCHE PATENTSCHRIFT

(11) **EP 3 320 029 B1**
(45) Veröffentlichungstag und Bekanntmachung des Hinweises auf die Patenterteilung: **01.09.2021**
(21) Anmeldenummer: 16751161.7
(22) Anmeldetag: 06.07.2016
(51) Int. Cl.: C08J 7/043, C08J 7/046, C09D 11/101, B41M 5/00, B05D 1/40, B05D 1/26, B41M 3/00, C08J 3/28, B05D 3/06, C08J 7/04, C09D 11/30, B05D 5/02

(54) **BESCHICHTUNGEN MIT MIKROSTRUKTURIERTEN OBERFLÄCHEN UND DEREN VERWENDUNG IN ARMATURENBRETTERN, SCHALTERKONSOLEN UND BEDIENUNGSPANELS**
COATINGS WITH MICROSTRUCTURED SURFACES AND USE IN DASHBOARDS, SWITCH CONSOLES AND CONTROL PANELS
REVÊTEMENTS AVEC SURFACES MICROSTRUCTURÉES ET LEUR UTILISATION DANS LES TABLEAUX DE BORD, CONSOLES DE COMMANDE ET TABLEAUX DE COMMANDE

(30) Priorität: 07.07.2015 DE 102015110947
(43) Veröffentlichungstag der Anmeldung: 16.05.2018
(73) Patentinhaber: Mankiewicz Gebr. & Co. GmbH & Co. KG, 21107 Hamburg (DE)
(72) Erfinder: DE ROSSI, Umberto, 22844 Norderstedt (DE)
(86) Internationale Anmeldenummer: PCT/DE2016/100298
(87) Internationale Veröffentlichungsnummer: WO 2017/005249

(56) Entgegenhaltungen:
- EP-A1- 1 652 545
- DE-A1-102007 046 910
- US-A1- 2011 177 303
- US-A1- 2011 285 637
- US-B1- 6 946 182

## Beschreibung

Die Erfindung betrifft Beschichtungen mit einer besonderen fingerführenden Haptik, die beim Berühren der Oberfläche Tast-oder Streichbewegungen der Finger in eine Vorzugsrichtung lenkt. Die Erfindung betrifft auch die Verwendung dieser Oberflächen in Armaturenbrettern, Schalterkonsolen oder Bedienungspanels zur Verbesserung der manuellen Bedienbarkeit.

In Fahrzeugen wie beispielsweise Automobilen werden zunehmend Schalterkonsolen und Schaltergruppen eingesetzt, die aus funktionalen oder designtechnischen Gründen sehr flach sind.

Da häufig viele Schalter nebeneinander angeordnet sind, ist die Verwechslungsgefahr sehr hoch. Außerdem erfordert die Wahl des richtigen Knopfs die Aufmerksamkeit des Fahrers, was zu Risiken im Straßenverkehr führen kann. Üblicherweise werden zur Verbesserung der Bedienbarkeit die Schalter in entsprechende Vertiefungen oder Erhöhungen in den Armaturenbrettern eingesetzt. Diese haben allerdings einen gewissen Raumbedarf, der aus technischen Gründen nicht immer zur Verfügung steht oder aus ästhetischen Gründen nicht erwünscht ist.

Bekannt ist der Einsatz von mikrostrukturierten Oberflächen zur Erzeugung von optischen Effekten durch Lichtbeugung und Interferenz. So ist aus WO 2000/30869 ein Verfahren zur Herstellung von dekorativen Beschichtungen bekannt, wobei eine mikrostrukturierte Oberfläche erzeugt wird, welche holografische Effekte, Farb-Flop oder Entspiegelung aufweist. Zur Herstellung dieser Oberflächen wird ein Beschichtungsstoff wie z.B. ein Basislack oder ein Klarlack auf ein Substrat aufgebracht. In die noch weiche, ungehärtete Schicht werden Prägematrizen gedrückt, welche das gewünschte Muster in die Schicht prägen. Nach der Aushärtung der Schicht wird eine entsprechend strukturierte Oberfläche erhalten.

Aufgabe der vorliegenden Erfindung ist es, verbesserte Bauteile mit Elemente wie Schaltern und Reglern, die zur Bedienung einer Maschine oder eines Apparats erforderlich sind, zur Verfügung zu stellen, insbesondere einfacher zu bedienende flache Bauteile wie Armaturenbretter, Schalterkonsolen oder Bedienungspanels. Die Aufgabe wird gelöst durch die erfindungsgemäßen Beschichtungen gemäß Hauptanspruch und deren Verwendung in oder auf Armaturenbrettern, Schalterkonsolen und Bedienungspanels gemäß Nebenanspruch. Weitere Ausführungsformen werden in den Unteransprüchen und der Beschreibung offenbart.

Die erfindungsgemäßen Beschichtungen umfassen Oberflächen, welche je nach Richtung unterschiedliche Gleitreibungskoeffizienten aufweisen. Beim Überstreichen der Oberfläche z.B. mit den Fingern müssen abhängig von der Richtung unterschiedliche Kräfte aufgewendet werden, so dass die Berührung unwillkürlich in Richtung des geringsten Kraftaufwands ausgeführt wird. Auf diese Weise wird die Berührung in eine bestimmte Richtung geführt. Dieser Effekt wird im Folgenden als Fingerführung bezeichnet.

Erfindungsgemäß weisen die Beschichtungen auf ihrer äußeren Oberfläche in zumindest einem Bereich Mikrostrukturen auf, die andere haptische Eigenschaften zeigen, insbesondere eine unterschiedliche Gleitreibung. Abhängig von der jeweiligen Anordnung der Bedienungselemente wie Regler, Taster, Knöpfe oder Schalter kann die Beschichtung unterschiedliche Muster aufweisen. So kann die Oberfläche beispielsweise entlang einer Achse, die zu den Bedienungselementen hinführt, eine geringere Gleitreibung zeigen und senkrecht zu dieser Achse eine höher Gleitreibung aufweisen.

Erfindungsgemäß werden Muster eingesetzt, welche gerade Linien zum "Einfangen des Fingers" mit gebogenen Linien kombinieren, damit der Finger direkt zum betreffenden Bedienelement geführt wird.

Erfindungsgemäß sind die Mikrostrukturen auf der äußeren Oberfläche eines beschichteten Substrats angebracht, wobei die Muster auf der oberste oder äußerste Schicht vor dem Aushärten erzeugt werden. Diese äußere Schicht kann Teil eines Beschichtungssystems im Einschicht- und Mehrschichtaufbau sein. Bevorzugt werden UV-härtende Beschichtungsstoffe wie Klarlacke, Farblacke oder Inkjet-Tinten eingesetzt. Die eingesetzten UV-härtenden Beschichtungsstoffe enthalten beispielsweise 5 bis 90% Bindemittel bezogen auf die Masse des Beschichtungsstoffs. Geeignete Bindemittel sind beispielsweise Oligomere wie aliphatische und aromatische Urethanacrylate, Polyetheracrylate und Epoxyacrylate, wobei die Acrylate mono-oder polyfunktionell sein können z.B. di-, tri- bis zu hexa-und deca-funktionell, Dipropylenglykoldiacrylat, Tripropylenglykoldiacrylat, Tetrahydrofurfurylacrylat, Isobornylacrylat, Isodecylacrylat und deren Gemische. Weiterhin können die Beschichtungsstoffe ein oder mehrere Pigmente enthalten wie beispielsweise Pigment Yellow 213, PY 151, PY 93, PY 83, Pigment Red 122, PR 168, PR 254, PR 179, Pigment Red 166, Pigment Red 48:2, Pigment Violet 19, Pigment Blue 15:1, Pigment Blue 15:3, Pigment Blue 15:4, Pigment Green 7, Pigment Green 36, Pigment Black 7 und Pigment White 6. Darüber hinaus können den Beschichtungsstoffen zur Einstellung ihrer Eigenschaften weitere Additive zugesetzt werden wie beispielsweise Dispergieradditive, Entschäumer, Photoinitiatoren und UV-Absorber.

Die erfindungsgemäßen Mikrostrukturen können durch Prägeverfahren mit einer Negativ-Matrize oder mittels Inkjet-Druckverfahren erzeugt werden.

In einer erfindungsgemäßen Ausführungsform werden die mikrostrukturierten Oberflächen erhalten, indem die oben genannten Muster mit einer Negativ-Matrize in die äußere Schicht geprägt werden. Zunächst wird ein UV-härtender Beschichtungstoff z.B. ein UV-Klar- oder Farblack appliziert. Es können die üblichen, dem Fachmann geläufigen Applikationsverfahren wie z.B. Sprühen, Spritzen, Streichen, Walzen, Rollen oder Tauchen angewendet werden. Nach der Applikation werden Prägematrizen mit ihrer Relief aufweisenden Seite in die ungehärtete, applizierte Schicht gedrückt. Die Prägematrizen bestehen dabei aus für die Anwendung geeigneten Materialien wie beispielsweise Silikonkunststoff. Anschließend wird die Schicht durch Bestrahlen zumindest teilweise ausgehärtet. Die Prägematrizen werden dann entfernt, die Schicht gegebenenfalls vollständig ausgehärtet.

In einer weiteren erfindungsgemäßen Ausführungsform werden mikrostrukturierten Oberflächen erhalten, indem die oben genannten Muster mittels Inkjet-Druckverfahren als obere oder äußere Schicht aufgebracht werden. Dazu wird ein Klarlack oder ein pigmentierter Lack, der Inkjet-fähig ist, über einen für industrielle Anwendungen üblichen Druckkopf wie z.B. Druckköpfe der Firmen Konica, Kyocera oder Dimatix, über Inkjet-Druck aufgebracht. Die Auftragung erfolgt über den Inkjet-Druck bereits in der gewünschten Struktur, so dass keine weitere Matrize notwendig ist. Für eine Erhöhung der Schichtdicke können mehrere Köpfe dasselbe Raster drucken oder der Druckvorgang wird so oft wiederholt, bis die gewünschte Profilhöhe erreicht ist. Diese Art der Auftragung kann mit einer Primer- oder Top-Coat-Schicht kombiniert werden, um die Eigenschaften der Beschichtung zu verbessern wie beispielsweise die Substrathaftung oder die Oberflächenresistenz.

Erfindungsgemäß werden Kunststoffsubstrate eingesetzt, die beispielsweise hergestellt sind aus Acryl-Butadien-Styrol Copolymerisat (ABS), Acryl-Butadien-Styrol Copolymerisat/Polycarbonat (ABS/PC), Polycarbonat (PC), Polypropylen (PP), Polyethylen (PE) oder_Polyethylenterephthalat (PET). Erfindungsgemäß bevorzugt werden eingesetzt Substrate aus Acryl-Butadien-Styrol Copolymerisat (ABS), Acryl-Butadien-Styrol Copolymerisat/Polycarbonat (ABS/PC) oder Polycarbonat.

Aufgrund der besonderen haptischen Eigenschaften weisen die erfindungsgemäß beschichteten Substrate eine Fingerführung auf. Sie sind damit besonders gut als Hilfe zur manuellen Bedienung von Reglern oder Tastern geeignet, die in größerer Zahl dicht nebeneinander angeordnet sind, wie z.B. in Bedienungspanels, Schalterkonsolen und Armaturenbrettern von Fahrzeugen. In einer weiteren Ausführungsform der Erfindung werden die beschichteten Substrate, welche auf ihrer Oberfläche zumindest zwei mikrostrukturierte Bereiche mit jeweils unterschiedlichen Gleitreibungskoeffizienten aufweisen, als Träger oder Verkleidung von Bedienungselementen zur Maschinensteuerung eingesetzt. Sie werden insbesondere als Armaturenbretter, Schalterkonsolen und Bedienungspanels in Fahrzeugen, bevorzugt in Automobilen eingesetzt.

Bei sehr dicht nebeneinander angeordneten Tastern oder Schaltern ist das Auffinden einer bestimmten Taste ohne Sichtkontakt schwierig. Die Gefahr, eine andere Taste als beabsichtigt zu drücken, ist bei dieser Anordnung vergleichsweise groß. Die erfindungsgemäße Beschichtung des Panels weist in ausgewählten Bereichen um die einzelnen Tasten herum in Bewegungsrichtung der Finger eine geringere Gleitreibung auf als auf den anderen Flächen. Eine entsprechende Bewegung der Finger entlang der Oberfläche ist daher innerhalb dieser Flächen wesentlich leichter. Die Bewegung wird somit unwillkürlich geführt. Die Fingerspitze kann dabei in einem deutlich größerem Bereich aufgesetzt werden und wird direkt zur Taste gelenkt.

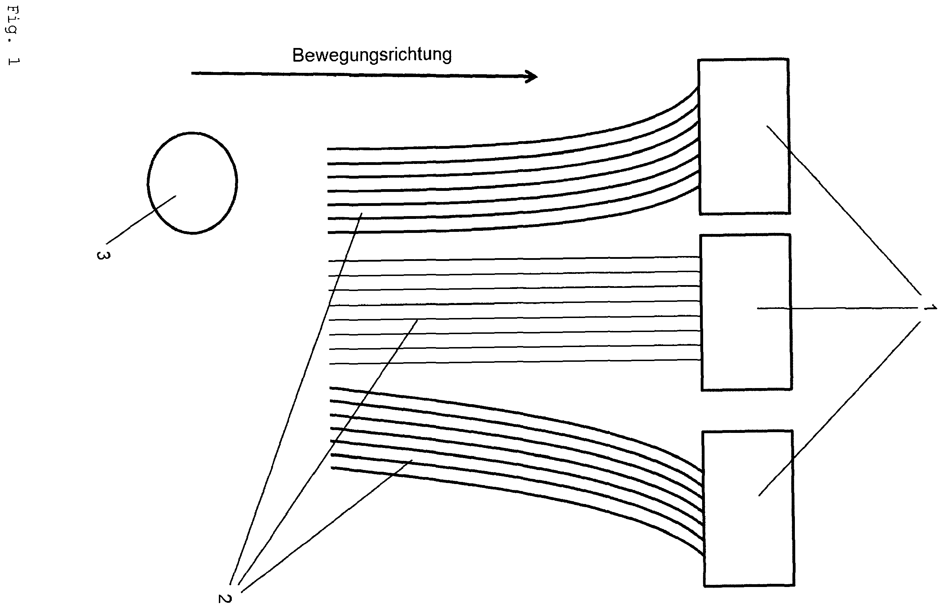

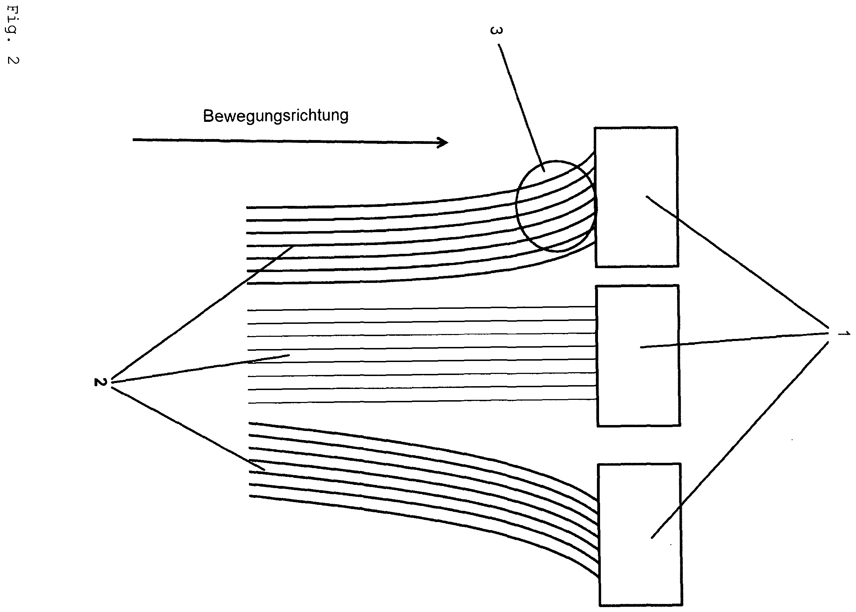

Fig.1 und Fig. 2 zeigen den schematischen Aufbau einer erfindungsgemäßen fingerführend mikrostrukturierten Oberfläche. In einem gewissen Abstand zu den zu bedienenden Tasten oder Schaltern (1) beginnen parallel verlaufende Mikrostrukturen (2), die durch auf die einzelnen Tasten (2) hinführenden Erhebungen oder Vertiefungen wie beispielsweise Rillen oder Wülste erhalten werden. Wird die Fingerspitze (3) in dem Bereich um die Tasten (1) herum auf die Oberfläche aufgesetzt und in Richtung der Tasten (1) bewegt, so wird die Bewegung der Fingerspitze (3) durch die unterschiedliche Haftreibung auf den mikrostrukturierten (2) und den glatten Bereichen der Oberfläche in eine Vorzugsrichtung, nämlich auf die Tasten hin, gelenkt.

### Beispiele

**Beispielformulierung 1**

| | Anteil [Gew.-%] |
|---|---|
| SR 506D (Isobornylacrylat) | 55 |
| Ebercryl 1290 (aliphatisches Urethanacrylat) | 32 |
| Byk 378 (Silikon-Oberflächenadditiv) | 2 |
| Irgacure 184 (Photoinitiator) | 6 |
| Butylacetat (Lösemittel) | 5 |

### Herstellung der Muster

Die Formulierung wurde mit einer Walze auf einen definierten Bereich aufgetragen und kurz bei Raumtemperatur abgelüftet. Innerhalb von 5 Minuten wurde eine aus Silicon gefertigte Matrize auf die Oberfläche gedrückt und während der Auflagezeit mit einer UV-Lampe (Fusion LH6, Hg-Strahler) mit einer Intensität von 500 mW/cm² und einer Dosis von 1500 mW/cm² gehärtet. Nach der Härtung wurde die Matrize vorsichtig abgezogen. Die Oberfläche ist sofort nach der Härtung einsatzbereit.

**Beispielformulierung 2**

| | Anteil [Gew.-%] |
|---|---|
| Bindemittelkomponente | |
| Genomer 4690 (aliphatisches Urethanacrylat) | 40 |
| CN 133 (aliphatisches Triacrylat Oligomer) | 20 |
| SR 399 (Di-pentaerythritolpentaacrylat) | 15 |
| Macrynal SM 510 (OH-funktionelles Acrylatharz) | 18 |
| Byk 378 (Silikon-Oberflächenadditiv) | 2 |
| Irgacure 184 (Photoinitiator) | 5 |
| | |
| Härterkomponente | |
| Desmodur N3900 (aliphatisches Polyisocyanatharz auf Basis von Hexamethylendiisocyanat) | 100 |

Bindemittelkomponente und Härterkomponente wurden im Verhältnis Mischungsverhältnis 4:1 gemischt. Die Mischung wurde mit einer Walze auf einen definierten Bereich aufgetragen. Innerhalb von 1 Minute wurde eine aus Silicon gefertigte Matrize auf die Oberfläche gedrückt und während der Auflagezeit mit einer UV-Lampe (Fusion LH6, Hg-Strahler) mit einer Intensität von 200 mW/cm² und einer Dosis von 700 mW/cm² angeliert und fixiert. Danach wurde die Matrize vorsichtig abgezogen und die Oberfläche bei 60 °C 30 Minuten lang thermisch nachgehärtet. Die Oberfläche ist nach der thermischen Härtung einsatzbereit.

## Patentansprüche

1. Beschichtetes Substrat mit einer fingerführenden Haptik aufweisend eine äußere Oberfläche, **dadurch gekennzeichnet, dass** die Oberfläche zumindest zwei mikrostrukturierte Bereiche mit jeweils unterschiedlichen Gleitreibungskoeffizienten aufweist, wobei die mikrostrukturierten Bereiche parallel verlaufende Erhebungen und/oder Vertiefungen aufweisen, und wobei die mikrostrukturierten Bereiche Muster aufweisen, welche gerade Linien und gebogene Linien kombinieren.

2. Beschichtetes Substrat nach Anspruch 1, **dadurch gekennzeichnet dass**, die äußere Oberfläche hergestellt ist aus einem UV-härtenden Beschichtungsstoff.

3. Beschichtetes Substrat nach Anspruch 1 oder 2, **dadurch gekennzeichnet, dass** die UV-härtenden Beschichtungsstoffe UV-härtende Lacke sind.

4. Beschichtetes Substrat nach Anspruch 1 oder 2,**dadurch gekennzeichnet, dass** die UV-härtenden Beschichtungsstoffe UV-härtende Inkjet-Tinten sind.

5. Verfahren zur Beschichtung eines Substrats nach einem der Ansprüche 1 bis 4, **dadurch gekennzeichnet, dass** dass die Mikrostrukturen auf UV-härtenden Lacken mittels Prägeverfahren mit Negativmatrix erzeugt werden oder dass die Mikrostrukturen aus UV-härtenden Tinten mittels Inkjet-Druckfahren erzeugt werden.

6. Verwendung eines beschichteten Substrats nach einem der Ansprüche 1 bis 4 aufweisend eine äußere Oberfläche, welche zumindest zwei mikrostrukturierte Bereiche mit jeweils unterschiedlichen Gleitreibungskoeffizienten aufweist, als Träger oder Verkleidung von Bedienungselementen zur Steuerung von Geräten, Maschinen und Apparaten.

7. Verwendung nach Anspruch 6 als Armaturenbrett, Schalterkonsole oder Bedienungspanel in Fahrzeugen, insbesondere in Automobilen.

## Claims

1. A coated substrate with a finger-guiding haptics comprising an outer surface, **characterized in that** the surface comprises at least two microstructured regions, each of which with sliding friction coefficients being respectively different from each other, with the microstructured regions showing running elevations and/or running depressions which are parallel, and with the microstructured regions showing patterns which combine straight lines and curved lines.

2. The coated substrate according to claim 1, **characterized in that** the outer surface is made of a UV-curing coating material.

3. The coated substrate according to claim 1 or 2, **characterized in that** the UV-curing coating materials are UV-curing paints.

4. The coated substrate according to claim 1 or 2, **characterized in that** the UV-curing coating materials are UV-curing inkjet inks.

5. The method for coating a substrate according to any one of claims 1 to 4, **characterized in that** the microstructures on UV-curing paints are created by embossing processes with a negative matrix or that the microstructures from UV-curing inks are created by inkjet printing.

6. The use of a coated substrate according to any one of claims 1 to 4, comprising an outer surface which shows α-t least two microstructured regions, each of which with sliding friction coefficients being respectively different from each other, as a carrier or cladding of control elements for the control of devices, machines and apparatuses.

7. The use according to claim 6 as a dashboard, a switch console or an operating panel in vehicles, especially in automobiles.

## Revendications

1. Un substrat revêtu d'une haptique de guidage des doigts - qui comprend une surface extérieure - **caractérisé en ce que** la surface présente au moins deux zones microstructurées ayant chacune des coefficients de frottement de glissement différents, les zones microstructurées présentant des structures en relief et/ou en profondeur parallèles, et les zones microstructurées présentant des dessins qui combinent des lignes droites et des lignes courbées.

2. Le substrat revêtu selon la revendication 1, **caractérisé en ce que** la surface extérieure est faite d'un matériau de revêtement durcissant aux UV.

3. Le substrat revêtu selon la revendication 1 ou 2, **caractérisé en ce que** les matériaux de revêtement durcissant aux UV sont des laques durcissant aux UV.

4. Le substrat revêtu selon la revendication 1 ou 2, **caractérisé en ce que** les matériaux de revêtement durcissant aux UV sont des encres à jet d'encre durcissant aux UV.

5. Le procédé de revêtement d'un substrat selon l'une quelconque des revendications 1 à 4, **caractérisé en ce que** les microstructures sur des laques durcissant aux UV sont réalisées par procédé de gaufrage avec matrice négative ou que les microstructures provenant d'encres durcissant aux UV sont réalisées par procédé d'impression à jet d'encre.

6. L'utilisation d'un substrat revêtu selon l'une quelconque des revendications 1 à 4 - qui a une surface extérieure présentant au moins deux zones microstructurées ayant chacune des coefficients de frottement de glissement différents - comme support ou gaine d'éléments de commande pour commander des dispositifs, des machines et des appareils.

7. L'utilisation selon la revendication 6 comme tableau de bord, console de commande ou panneau de commande dans des véhicules, en particulier dans des automobiles.
